# EUROPEAN PATENT APPLICATION

(11) **EP 1 762 464 A1**
(43) Date of publication of application: **14.03.2007**
(21) Application number: 06076624.3
(22) Date of filing: 28.08.2006
(51) Int. Cl.: B62D 11/00

(54) **Method of castor management**

(30) Priority: 07.09.2005 US 220922
(71) Applicant: Delphi Technologies, Inc., Troy, Michigan 48007 (US)
(72) Inventor: Voto, Andrew M., Brighton, MI 48116 (US); Selby, Ronald K., Flint, MI 48506 (US); Ross, David A., Columbiaville, MI 48421 (US); Perry, Kenneth D., New Lothrop, MI 48460 (US); Dumsa Jr, Alfred V., Hartland, MI 48353 (US)
(74) Representative: Denton, Michael John

(57) **Abstract**

The invention provides a drive system (10) for a vehicle (12) and a method for driving a vehicle (12). The drive system (10) includes a first drive wheel (14) rotatable about a first axis (16) for supporting the vehicle (12). The drive system (10) also includes a second drive wheel (18) rotatable about the first axis (16) for supporting the vehicle (12). The drive system (10) also includes at least one castor (20) rotatable about a second axis (22) transverse to the first axis (16). The castor (20) is forward of the first and second drive wheels (14, 18) in a direction of travel of the vehicle (12). The drive system (10) also includes a controller (24) for differentially driving the first and second drive wheels (14, 18) in response to a position of the at least one castor (20) about the second axis (22).

## Description

### TECHNICAL FIELD

The invention relates to vehicles having driven wheels cooperating with at least one castor for supporting the vehicles.

### BACKGROUND OF THE INVENTION

Some vehicles, such as wheel chairs, are supported by wheels that are driven in rotation and one or more castors. Often, the driven wheels are rotatable about a first axis fixed with respect to the vehicle. The castors are rotatable about a second axis extending transverse to the first axis and spaced from the first axis. Under certain operating conditions, the castors are disposed forward of the driven wheels in the direction of travel. For example, in most modem wheel chairs, the castors are forward of the driven wheels when the wheel chair is moving forward. Alternatively, in some pallet carrying devices, a single castor is forward of the driven wheels when the pallet carrier is moving backward.

### SUMMARY OF THE INVENTION

The invention provides a drive system for a vehicle and a method for driving a vehicle. The drive system includes a first drive wheel rotatable about a first axis for supporting the vehicle. The drive system also includes a second drive wheel rotatable about the first axis for supporting the vehicle. The drive system also includes at least one castor rotatable about a second axis transverse to the first axis. The castor is forward of the first and second drive wheels in a direction of travel of the vehicle. The drive system also includes a controller for differentially driving the first and second drive wheels in response to a position of the at least one castor about the second axis.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a perspective view of the exemplary embodiment of the invention; and
Figure 2 is a schematic view of a drive system of the exemplary embodiment of the invention.

### DESCRIPTION OF THE PREFERRED EMBODIMENT

The invention provides a drive system 10 for a vehicle 12 and a method for driving a vehicle 12. In the exemplary embodiment of the invention, the vehicle 12 is a wheel chair 34. The wheel chair 34 includes a seat portion 36 and a back portion 38 engaged with one another. The drive system 10 includes a first drive wheel 14 rotatable about a first axis 16 for supporting the vehicle 12 and a second drive wheel 18 rotatable about the first axis 16 for supporting the vehicle 12. The first and second drive wheels 14, 18 are disposed on opposite sides of the back portion 38.

The drive system 10 also includes at least one castor 20 rotatable about a second axis 22 transverse to the first axis 16. The second axis 22 is defined by a rod 22. The castor 20 includes a second rod 46 extending transverse to and rotatably engaged with the rod 22. The castor 20 also includes a wheel 48 rotably disposed on the second rod 46. The exemplary vehicle 12 also includes a second castor 42 substantially similar to the first castor 20, being rotatable about a third axis 44 transverse to the first axis 16. The first and second castors 20, 42 are disposed on opposite sides of the seat portion 36 spaced from the back portion 38. The exemplary first and second castors 20, 42 are unbiased, being freely rotatable.

The first and second castors 20, 42 are forward of the first and second drive wheels 14, 18 in a direction of travel of the vehicle 12. The first and second castors 20, 42 may be forward of the first and second drive wheels 14, 18 during a majority of the operating conditions, such as a modem wheel chair. Alternatively, the first and second castors 20, 42 may be forward of the first and second drive wheels 14, 18 during less than a majority of the operating conditions, such as pallet carrier moving in reverse. As will be set forth in greater detail below, the invention is applicable to both kinds of vehicles.

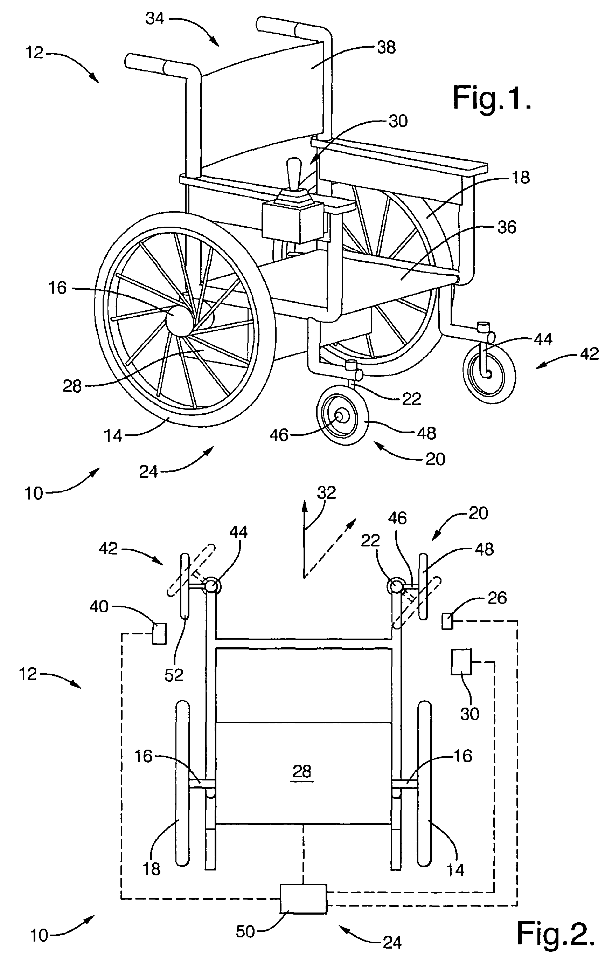

The drive system 10 also includes a controller 24 for differentially driving the first and second drive wheels 14, 18 in response to a position of the at least one castor 20 about the second axis 22. Referring now to Figure 2, it has been observed that when the at least one castor 20 is not aligned with a desired direction of travel 32, the vehicle 12 will travel transverse to the desired direction of travel 32 at least initially. This can be problematic when the vehicle is in a relatively narrow space. The intial movement of the vehicle 12 could cause the vehicle 12 to strike and damage an adjacent structure such as a wall and/or could cause the vehicle 12 to become wedged between other structures. In Figure 2, the castors 20, 42 are shown in phantom misaligned with the desired direction of travel 32. Also, the initial movement of the vehicle 12 because of the misalignment, without the benefit of the invention, is shown in phantom extending transverse to the desired direction of travel 32.

The exemplary controller includes a sensor 26 for sensing the position of the first castor 20 about the second axis 22 and emitting a first signal corresponding to the position. The sensor 26 can sense the angular position of the rods 22 or the position of the rod 46 or the position of the wheel 48. The exemplary controller includes a second sensor 40, substantially similar to the sensor 26, for sensing the position of the second castor 42 about the third axis 44 and emitting a second signal corresponding to the position.

The exemplary controller 24 also includes a motor 28 operable to differentially rotate the first and second drive wheels 14, 18 in response to signal emitted by the sensor 26. The motor 28 can rotate the first drive wheel 14 at a first angular velocity, a first angular acceleration, and/or a first angular direction and rotate the second drive wheel 18 at a second angular velocity, a second angular acceleration, and/or a second angular direction, wherein any combination of the first and second angular velocities, the first and second angular accelerations, and the first and second angular directions are different from one another. For example, the motor 28 can rotate the first wheel 14 at a first angular velocity and rotate the second wheel 18 at a second angular velocity different than the first angular velocity. The motor 28 can control the first and second wheels 14, 18 in a manner similar to the manner that tank tracks are controlled to move the vehicle 12 in the desired direction of travel 32.

The exemplary controller 24 also includes an input device 30 engageable by an operator of the vehicle 12 for communicating a desired direction of travel 32 for the vehicle 12. In the exemplary embodiment of the invention, the input device 30 includes a joystick positionable on the wheel chair 34. In alternative embodiments of the invention, the input device 30 could be remote from the vehicle 12. In other words, the vehicle 12 could be remote controlled.

In operation, the exemplary controller 24 is operable to engage the motor 28 to deferentially rotate at least one of the first and second drive wheels 14, 18 in response to an extent of alignment between the desired direction of travel 32 and the position of the castors 20, 42. For example, the controller 24 is operable to rotate the first drive wheel 14 at a first angular acceleration and rotate the second drive wheel 18 at a second angular acceleration in response to castor 20 being in a first position about the second axis 22, wherein the first and second angular accelerations are different from one another in at least one of direction and rate. In another example, the controller 24 can rotate the first drive wheel 14 at a third angular acceleration and rotate the second drive wheel 18 at a fourth angular acceleration in response to the at least one caster being in a second position about the second axis 22 different than the first position. The first and third angular accelerations can be different from one another in at least one of direction and rate. Likewise, the second and fourth angular accelerations can different from one another in at least one of direction and rate.

The exemplary controller 24 includes an electronic control unit (ECU) 50. The ECU 50 communicates with the sensors 26, 40, the motor 28, and the input device 30. The input device 30 communicates the desired direction of travel 32 to the ECU 50. The sensor 26 communicates the position of the castor 20 about the axis 22 to the ECU 50. The position of the castor 20 corresponds to the extent of alignment of the castor 20 with the desired direction of travel 32. When the castor 20 is aligned with the desired direction of travel 32, the wheel 48 is disposed in a plane extending parallel to the desired direction of travel 32, as shown in solid line in Figure 2. The sensor 40 communicates the position of the castor 42 about the axis 44 to the ECU 50. When the castor 42 is aligned with the desired direction of travel 32, a wheel 52 of the castor 42 is disposed in a plane extending parallel to the desired direction of travel 32, as shown in solid line in Figure 2. After the ECU 50 has received signals from the input device 30 and the sensors 26, 40, the ECU 50 engages the motor 28 to differential drive the wheels 14, 18.

The controller 24 controls the wheels 14, 18 such that the vehicle 12 moves in the desired direction of travel 32 and such that the castors 20, 42 become aligned with the desired direction of travel 32. For example, in a first movement, if the castors 20, 42 are aligned with the desired direction of travel 32, the vehicle 12 may move at full speed in the desired direction of travel 32. However, in a second movement, if the castors 20, 42 are not aligned with the desired direction of travel 32, the wheels 14, 18 would be moved differently than in the first movement to align the first and second castors 20, 42 with the desired direction of travel 32. In the second movement, the operator may perceive that the vehicle 12 does not immediately move at full speed in the desired direction of travel 12 as in the first movement. However, in both the first and second movements, the operator would perceive the vehicle 12 moving in the desired direction of travel 32 from the beginning of movement.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A drive system (10) for a vehicle (12) comprising:
a first drive wheel (14) rotatable about a first axis (16) for supporting the vehicle (12);
a second drive wheel (18) rotatable about said first axis (16) for supporting the vehicle (12);
at least one castor (20) rotatable about a second axis (22) transverse to said first axis (16) and forward of said first and second drive wheels (14, 18) in a direction of travel of the vehicle (12); and
a controller (24) for differentially driving said first and second drive wheels (14, 18) in response to a position of said at least one castor (20) about said second axis (22).

2. The drive system (10) of claim 1 wherein said controller (24) further comprises:
a sensor (26) for sensing the position of said at least one castor (20) about said second axis (22) and emitting a signal corresponding to the position.

3. The drive system (10) of claim 2 wherein said controller (24) further comprises:
a motor (28) operable to differentially rotate said first and second drive wheels (14, 18) in response to signal emitted by the sensor (26).

4. The drive system (10) of claim 3 wherein said controller (24) further comprises:
an input device (30) engageable by an operator of the vehicle (12) for communicating a desired direction of travel (32) for the vehicle (12).

5. The drive system (10) of claim 4 wherein said controller (24) is further defined as being operable to engage the motor (28) to deferentially rotate at least one of said first and second drive wheels (14, 18) in response to an extent of alignment between the desired direction of travel (32) and the position of the at least one castor (20).

6. The drive system (10) of claim 1 wherein the vehicle (12) is further defined as a wheel chair (34).

7. The drive system (10) of claim 1 wherein said controller (24) is further defined as being operable to rotate said first drive wheel (14) at a first angular acceleration and rotate said second drive wheel (18) at a second angular acceleration in response to said at least one caster being in a first position about said second axis (22), wherein said first and second angular accelerations are different from one another in at least one of direction and rate.

8. The drive system (10) of claim 7 wherein said controller (24) is further defined as being operable to rotate said first drive wheel (14) at a third angular acceleration and rotate said second drive wheel (18) at a fourth angular acceleration in response to said at least one caster being in a second position about said second axis (22) different than said first position, wherein said first and third angular accelerations are different from one another in at least one of direction and rate and wherein said second and fourth angular accelerations are different from one another in at least one of direction and rate.

9. A method for driving a vehicle (12) comprising the steps of:
supporting the vehicle (12) with a first drive wheel (14) rotatable about a first axis (16);
supporting the vehicle (12) with a second drive wheel (18) rotatable about the first axis (16);
disposing at least one castor (20) rotatable about a second axis (22) transverse to the first axis (16) and forward of the first and second drive wheels (14, 18) in a direction of travel of the vehicle (12); and
differentially driving the first and second drive wheels (14, 18) in response to a position of the at least one castor (20) about the second axis (22) with a controller (24).

10. The method of claim 9 further comprising the step of:
determining a desired direction of travel (32) before said differentially driving step.

11. The method of claim 10 further comprising the step of:
sensing an extent of alignment between the at least one castor (20) and the desired direction of travel (32) before said differentially driving step.

12. The method of claim 11 said differentially driving step further comprises the step of:
moving the wheels to concurrently travel in the desired direction of travel (32) as well as align the at least one castor (20) with the desired direction of travel (32).

13. A drive system (10) for a vehicle (12) comprising:
a first drive wheel (14) rotatable about a first axis (16) for supporting the vehicle (12);
a second drive wheel (18) rotatable about said first axis (16) for supporting the vehicle (12);
a first castor (20) rotatable about a second axis (22) transverse to said first axis (16) and forward of said first and second drive wheels (14, 18) in a direction of travel of the vehicle (12);
a second castor (42) rotatable about a third axis (44) transverse to said first axis (16) and forward of said first and second drive wheels (14, 18) in a direction of travel of the vehicle (12); and
a controller (24) for differentially driving said first and second drive wheels (14, 18) in response to the positions of said first and second castors (20, 42) about said second and third axis (22, 44), respectively.

14. The drive system (10) of claim 13 further comprising:
a chair (34) having a seat portion (36) and a back portion (38) and being supported for movement by said first and second drive wheels (14, 18) and said first and second castors (20, 42), wherein said first and second drive wheels (14, 18) are disposed on opposite sides of said back portion (38) and said first and second castors (20, 42) are disposed on opposite sides of said seat portion (36) spaced from said back portion (38).

15. The drive system (10) of claim 14 further comprising:
a first sensor (26) for sensing the position of said first castor (20) about said second axis (22) and emitting a first signal corresponding to the position.

16. The drive system (10) of claim 15 further comprising:
a second sensor (40) for sensing the position of said second castor (42) about said third axis (44) and emitting a second signal corresponding to the position.

17. The drive system (10) of claim 16 further comprising:
an input device (30) engageable by an operator of the vehicle (12) for communicating a desired direction of travel (32) for the vehicle (12), wherein said controller (24) receives said first and second signals and communicates with said input device (30) before moving said first and second drive wheels (14, 18).

18. The drive system (10) of claim 17 wherein said controller (24) moves said first and second wheels to align said first and second castors (20, 42) with the desired direction of travel (32).

19. The drive system (10) of claim 18 wherein first movement of said first and second wheels to move said chair (34) in the desired direction of travel (32) when said first and second castors (20, 42) are aligned with the desired direction of travel (32) is different than second movement of said first and second wheels to move said chair (34) in the desired direction of travel (32) when said first and second castors (20, 42) are misaligned with the desired direction of travel (32), wherein said chair (34) moves in the desired direction of travel (32) during said first and second movements.

20. The drive system (10) of claim 19 wherein said first and second castors (20, 42) are unbiased.
